# EUROPÄISCHE PATENTSCHRIFT

(11) **EP 1 236 233 B1**
(45) Veröffentlichungstag und Bekanntmachung des Hinweises auf die Patenterteilung: **04.02.2004**
(21) Anmeldenummer: 00969506.5
(22) Anmeldetag: 14.10.2000
(51) Int. Cl.: H01M 4/88, H01M 8/10

(54) **HERSTELLUNG VON KATALYSATORSCHICHTEN AUF MEMBRANEN FÜR NIEDERTEMPERATUR-BRENNSTOFFZELLEN**
PRODUCTION OF CATALYST LAYERS ON MEMBRANES FOR LOW-TEMPERATURE FUEL CELLS
PRODUCTION DE COUCHES CATALYTIQUES SUR DES MEMBRANES POUR CELLULES ELECTROCHIMIQUES A BASSE TEMPERATURE

(30) Priorität: 28.10.1999 DE 19951936
(43) Veröffentlichungstag der Anmeldung: 04.09.2002
(73) Patentinhaber: Forschungszentrum Jülich GmbH, 52425 Jülich (DE)
(72) Erfinder: GUPTA, Ashok, Kumar, 52428 Jülich (DE); TIETZ, Frank, 52428 Jülich (DE); BUCHKREMER, Hans, Peter, 52525 Heinsberg (DE); KUNDLER, Isabel, 52428 Jülich (DE)
(74) Vertreter: Gille Hrabal Struck Neidlein Prop Roos
(86) Internationale Anmeldenummer: PCT/EP2000/010129
(87) Internationale Veröffentlichungsnummer: WO 2001/031725

(56) Entgegenhaltungen:
- EP-A- 0 945 910
- DE-A- 3 334 330
- DE-A- 19 616 160
- US-A- 5 330 860
- US-A- 5 861 222

## Beschreibung

Die Erfindung betrifft die Herstellung einer Katalysatorschicht auf einer Membran für Niedertemperatur - Brennstoffzellen.

Aus der Druckschrift DE 44 30 958 Cl sowie aus der Druckschrift DE 195 31 852 Cl sind Brennstoffzellen bekannt, die eine Kathode, einen Elektrolyten sowie eine Anode aufweisen. In einen an die Kathode angrenzenden Kanal oder Raum wird ein Oxidationsmittel (z. B. Luft) und in einen an die Anode angrenzenden Kanal oder Raum wird Brennstoff (z. B. Wasserstoff) zugeführt.

Die Betriebsmittel gelangen zu den Elektroden und reichern sich hier ab. Anschließend treten die abgereicherten Betriebsmittel wieder aus und werden aus der Brennstoffzelle herausgeleitet.

An der Anode der aus der Druckschrift DE 195 31 852 Cl bekannten Brennstoffzelle bilden sich in Anwesenheit des Brennstoffs mittels eines Katalysators Protonen. Die Protonen passieren eine als Elektrolyt vorgesehene Membran und verbinden sich auf der Kathodenseite mit dem vom Oxidationsmittel stammenden Sauerstof f zu Wasser. An der Anode werden Elektronen freigesetzt und so elektrische Energie erzeugt.

Katalysatorschichten sind bei einer Niedertemperatur - Brennstoffzelle auf beiden Seiten einer Membran aufgebracht. Die Membran besteht aus Polymermaterial, so z. B. Nafion®. Im allgemeinen ist auf den Schichten, die aus Katalysatormaterial bestehen, jeweils eine poröse Gasdiffusionsschicht aufgebracht. Die Gasdiffusionsschicht dient sowohl der Verteilung der Reaktanden als auch der Stromableitung.

Bei einem Herstellungsverfahren wird die aktive Schicht, also die Katalysatorschicht auf einen Träger aufgebracht. Der Träger wird mit der Membran verpreßt, so daß die aktive Schicht an die Membran grenzt. Anschließend wird der Träger entfernt.

Obwohl mit diesem Verfahren qualitativ hochwertige Katalysatorschichten hergestellt werden können, weist es den Nachteil auf, daß mehrere Verarbeitungsschritte erforderlich sind. Darüber hinaus besteht das Risiko einer unvollständigen Übertragung des Katalysatormaterials auf die Membran, so daß ein gewisser Anteil an Katalysatormaterial nicht genutzt wird.

Um die Zahl der Arbeitsschritte zu minimieren, sollte die Katalysatormischung direkt auf die Membran aufgetragen werden. Es ist daher versucht worden, die aktive Schicht, d. h., die aus Katalysatormaterial bestehende Schicht auf eine Gasdiffusionsschicht aufzusprühen. Als Material werden dabei kohlegeträgerte Edelmetall - Katalysatoren verwendet. Anschließend wird eine Gasdiffusionsschicht auf einer Seite der Membran durch Heißpressen mit dieser verbunden. Die Katalysatorschicht befindet sich dann zwischen der Membran und der Gasdiffusionsschicht.

Zwar werden mit dem vorgenannten Verfahren die Zahl der Herstellungsschritte minimiert. Es erweist sich jedoch als problematisch, daß bei diesem Verfahren ein Lösungsmittel eingesetzt wird. Eine Quellung des Membranmaterials konnte aufgrund des Lösungsmittels nicht vermieden werden. Im allgemeinen verzieht sich dann das Membranmaterial so stark, daß eine Beschichtung nicht mehr möglich ist.

Das vorgenannte Problem wird bei dem aus der Druckschrift "M.S.Wilson, S.Gottesfeld, J. Elektrochem. Soc., Vol. 139 (2), L28, 1992 bekannten Verfahren gelöst, indem die Membran durch Unterdruck auf einem Vakuumtisch festgehalten wird, während das Katalysatormaterial mit einer schrittmotorgesteuerten Sprüheinheit aufgetragen wird. Das Verfahren funktioniert zwar gut, es erfordert jedoch einen erheblichen apparativen Aufwand. Es ist somit vergleichsweise teuer.

Aus der Druckschrift DE 197 05 469 Cl ist ein Verfahren bekannt, bei dem mit Hilfe von Fotolack eine Maske auf ein Substrat aufgebracht wird. Katalysatormaterial, wie z. B. Platin, wird im Anschluß elektrochemisch oder durch Sputtern durch die Maske hindurch auf dem Substrat aufgetragen. Der Fotolack wird durch Belichtung entfernt. Eine Membran wird mit dem Katalysatormaterial verpreßt, welches sich auf dem Substrat befindet. Schließlich wird das Substrat abgelöst.

Auch das vorgenannte Verfahren zur Auftragung von Katalysatormaterial auf eine Membran weist nachteilhaft sehr viele Schritte auf.

Aus der Druckschrift EP 0 945 910 ist ein Verfahren zum Auftragen einer Tinte oder Paste auf eine Polymermembran bekannt. Die Tinte oder Paste enthält ein katalytisch aktives Metall wie Pt/C und ein Polymer, nämlich Nafion. Als Lösungsmittel sind unter anderem Kohlenwasserstoffgemische vorgesehen. Das Gemisch enthält stets auch hydrophile Lösungsmittel. Die Paste wird auf die Membran beispielsweise durch Siebdruck aufgetragen und bei Temperaturen von 60 bis 140 °C getrocknet.

Eine Quellung des Membranmaterials aufgrund der gewählten Lösungsmittelgemische ist auch bei diesem Stand der Technik zu erwarten.

Aufgabe der Erfindung ist die Schaffung eines Verfahrens, mit dem einfach und preiswert das Katalysatormaterial auf eine Membran aufgetragen werden kann.

Die Aufgabe der Erfindung wird durch ein Verfahren mit den Merkmalen des ersten Anspruchs gelöst. Vorteilhafte Ausgestaltungen ergeben sich aus den Unteransprüchen.

Anspruchsgemäß wird aus einem unpolaren Lösungsmittel, katalytisch aktivem Material sowie einer Polymerlösung eine Paste hergestellt. Durch Heißpressen wird die aufgetragene Schicht mit der Membran verbunden. Während dieses Vorgangs entweichen die Lösungsmittel.

Als katalytisch aktives Material wird typischerweise Platin eingesetzt. Nafion® stellt ein Beispiel für ein geeignetes Polymer dar. Als Lösungsmittel kann ein handelsüblicher Dühnschichtverdünner, so zum Beispiel der Dünnschichtverdünner 8470 der Firma DuPont verwendet werden. Ein solcher Dünnschichtverdünner besteht im wesentlichen aus einem Terpineol-Isomerengemisch, dem weitere Komponenten zugesetzt sind, um die Benetzung von Feststoffen zu verbessern.

Erfindungswesentliche Maßnahme ist das Vorsehen eines hydrophoben, also unpolaren Lösungsmittels. Es hat sich nämlich gezeigt, daß polare Lösungsmittel wie zum Beispiel Wasser für die Quellung der Membran verantwortlich sind. Das Problem bezüglich der Quellung wird also dadurch vermieden, daß hydrophobe Lösungsmittel (unpolare Lösungsmittel) verwendet werden. Durch diese Maßnahme wird es also möglich, eine Schicht auf die Membran direkt aufzutragen, unter Wärme zu verpressen und so in wenigen Verarbeitungsschritten zum gewünschten Ergebnis zu gelangen.

Die Temperatur während eines solchen Arbeitsvorganges beträgt beispielsweise 140°C. Grundsätzlich ist die Temperatur so zu wählen, daß die Lösungsmittel während des Preßvorganges verdampfen, ohne daß im übrigen die Materialien geschädigt werden. Temperaturen um die 140°C erfüllen regelmäßig diese Anforderungen.

Das katalytisch aktive Material befindet sich zweckmäßig auf einem Trägermaterial wie zum Beispiel Kohlenstoff. So wird eine große katalytisch aktive Fläche unter minimalem Einsatz von Katalysatormaterial bereitgestellt. Die Kosten für teures katalytisch aktives Material wie zum Beispiel Platin oder Rubidium werden so minimiert.

Die Polymere in der Paste dienen zum Verbinden des katalytisch aktiven Materials mit der Polymer-Membran. Idealerweise wird als Polymer in der Paste ein solches eingesetzt, aus dem die Membran besteht. Es ist so im besonderen Maße sichergestellt, daß die gewünschte Bindung des Katalysatormaterials an die Membran zuverlässig erreicht wird.

Die Paste kann durch eine Dickschicht-Technik, so zum Beispiel durch Schablonendruck, auf die Polymer-Membran aufgetragen werden. Besonders vorteilhaft ist die Verwendung eines Siebdruckverfahrens, da hierdurch präzise dosiert werden kann. Ferner sind die durch Siebdruck hergestellten Schichten besonders homogen.

Außerdem werden Materialverluste minimiert.

Bei einem Siebdruckverfahren wird ein von einem Rahmen eingerahmtes Sieb auf die Membran aufgelegt. Eine Paste wird mittels eines Rakels in die Poren des Siebes hineingedrückt. Anschließend wird das Sieb entfernt und die Paste liegt schichtförmig auf der Membran vor. Die Paste wird - wie bereits erwähnt - anschließend unter Wärme mit der Membran verpreßt.

Es können so beispielsweise 10 bis 100 µm dicke Katalysatorschichten auf der Membran aufgetragen werden.

Vorteilhaft wird die aufgetragene Paste vor dem Verpressen zunächst bei erhöhten Temperaturen getrocknet. Unter erhöhten Temperaturen werden Temperaturen wenig oberhalb der Zimmertemperatur verstanden. Diese liegen wesentlich unter der Temperatur, bei der die Schicht mit der Membran verpreßt wird. 50°C ist eine geeignete Trocknungstemperatur.

In einer weiteren vorteilhaften Ausgestaltung des Verfahrens wird neben dem Polymermaterial ein weiterer Binder zur Paste hinzugegeben, um so die spätere Bindung des Katalysatormaterials an die Membran zu verstärken. Es können konventionelle, aus der Siebdrucktechnik bekannte Binder eingesetzt werden, soweit diese hydrophobe Lösungsmittel enthalten. Ferner sind die Binder so zu wählen, daß die im Binder vorhandenen Lösungsmittel bei den Verarbeitungstemperaturen verdampfen. Die Verdampfung sollte also insbesondere unterhalb von 140°C einsetzen.

Ein Beispiel für einen zusätzlichen Binder stellt PHE dar. Hierbei handelt es sich um Phthalsäure bis-(2-ethylhexylester). Polyvenylbuteral (PVB) oder Ethylcellulose sind weitere Beispiele für zusätzliche Binder.

Es ist ferner zweckmäßig, der Paste einen Plastifizierer hinzuzugeben. Hierdurch werden spätere Rißbildungen vermieden. An den Plastifizierer sind die vorgenannten Anforderungen zu stellen. Der Plastifizierer darf also keine polaren Lösungsmittel enthalten. Ferner müssen Lösungsmittel bei den Betriebstemperaturen verdampfen.

Ölsäure oder Phtalsäure-bis-(2-ethyl-hexylester (PHE) sind Beispiele für geeignete Plastifizierer.

### Ausführungsbeispiel:

Feststoff Pt/Kohle wird mit 5 Vol.-% Nafion-Lösung der Fa. DuPont oder Fa. Fluka 1:2 Pt/Kohle:Nafion-Lösung unter Rühren vermischt, so daß die Masse homogen benetzt wird. Ein anschließender Trocknungsprozeß bei 80°C führt zu einer gleichmäßigen Umhüllung des Feststoffs mit dem Polymer. Diese Masse (0,77g) wird dann grob pulverisiert und mit (2,6g von) einem Lösungsmittelgemisch (Dünnschicht Verdünner 8470 der Fa. DuPont mit oder ohne 0,1 Gew.-% Binder) versetzt. Einige Tropfen (0,05g) Ölsäure oder PHE werden hinzugegeben, und die ganze Masse wird auf einem Dreiwalzenstuhl homogenisiert. Während des Homogenisierungsvorganges wird zusätzlich etwas Lösungsmittel dazugegeben, bis eine streichfähige Paste entsteht. Dabei werden zuvor entstandene Agglomerate mechanisch zerstört und eine einheitlich Korngröße erzielt.

Diese Paste wird durch Dickschichttechnik, in diesem Fall mit dem Siebdruck- oder dem Schablonendruck, auf die Polymer-Membran aufgetragen. Auf diese Weise können in einem Beschichtungsschritt 10-100 µm Katalysatorschicht aufgetragen werden. Eine so beschichtete Membran-Elektroden-Einheit wird schließlich bei 50°C getrocknet und die Schicht, also die Elektrode bei 130°C unter Druck auf der Membran fixiert.

Durch die erreichte Formstabilität der Membran während der Herstellung des Verbundes kann der Herstellungsprozeß leicht in eine Serienfertigung umgesetzt werden.

## Patentansprüche

1. Verfahren zum Herstellen einer Membran mit aufgebrachter katalytisch aktiver Schicht für die Verwendung in Niedertemperatur-Brennstoffzellen mit den Schritten
a) Verarbeitung eines hydrophoben Lösungsmittels, eines katalytisch aktiven Materials sowie einer Polymerlösung zu einer Paste, die keine hydrophilen Lösungsmittel enthält,
b) schichtförmiges Auftragen der Paste auf eine Polymer-Membran,
c) Verpressen der Membran mit der aufgetragenen Paste unter Zufuhr von Wärme, so daß die Lösungsmittel entweichen und das katalytisch aktive Material auf der Membran fixiert wird.

2. Verfahren nach Anspruch 1, bei dem die Paste durch Siebdruck schichtförmig auf die Membran aufgetragen wird.

3. Verfahren nach Anspruch 1 oder 2, bei dem zur Paste ein weiterer Binder zugesetzt wurde.

4. Verfahren nach einem der vorgehenden Ansprüche, bei der der Paste ein Plastifizierer beigemischt wurde.

5. Verfahren, nach einem der vorhergehenden Ansprüche, bei dem die auf die Membran schichtförmig aufgebrachte Paste vor dem Verpressen bei Temperaturen von 30 - 80°C getrocknet wird.

6. Verfahren nach einem der vorhergehenden Ansprüche, bei dem die Paste in einer Dicke von 10-100 µm auf die Membran aufgetragen wird.

7. Verfahren nach einem der vorhergehenden Ansprüche, bei dem Nafion® als Polymer eingesetzt wird.

8. Verfahren nach einem der vorhergehenden Ansprüche, bei dem bei Temperaturen von 100 °C bis 150 °C die aufgetragene Paste mit der Membran verpreßt wird.

9. Verfahren nach einem der vorhergehenden Ansprüche, bei dem Platin als Katalysatormaterial verwendet wird.

10. Verfahren nach einem der vorhergehenden Ansprüche, bei dem ein Lösungsmittel verwendet wird, welches überwiegend Terpineol enthält.

11. Verfahren nach einem der vorhergehenden Ansprüche, bei dem die Paste aus 10 bis 50 %, vorzugsweise 20 bis 30 % Gewichtsanteilen Feststoff, 0 bis 10 %, vorzugsweise 1 bis 2 % Gewichtsanteilen Binder, 0 bis 5 %; vorzugsweise 1 bis 2 % Gewichtsanteilen Plastifizierer, Rest Lösungsmittel besteht.

12. Verfahren nach einem der vorhergehenden Ansprüche, bei dem die Paste 60 bis 80 Gew.-% Lösungsmittel enthält.

## Claims

1. A method for the production of a membrane comprising an applied catalyst layer for the use in low temperature fuel cells, comprising the steps of:
a) mixing a hydrophobic solvent, a catalyst material as well as a polymer solution for forming a paste, which does not contain any hydrophilic solvents,
b) applying layers of the paste on a polymer membrane,
c) compression of the membrane with the applied paste while supplying heat, so that the solvents disengage and the catalyst material is fixed on the membrane.

2. A method according to claim 1, in which the paste layers are applied on the membrane by serigraphy.

3. A method according to claim 1 or 2, in which another binder has been added to the paste.

4. A method according to one of the preceding claims, in which a plasticizer has been added to the paste.

5. A method according to one of the preceding claims, in which the paste layers, which have been applied on the membrane, are dried at temperatures comprised between 30°C and 80°C before the compression.

6. A method according to one of the preceding claims, in which the paste is applied on the membrane with a thickness comprised between 10 and 100 µm.

7. A method according to one of the preceding claims, in which Nafion® is used as polymer.

8. A method according to one of the preceding claims, in which the applied paste is compressed with the membrane at temperatures comprised between 100°C and 150°C.

9. A method according to one of the preceding claims, in which platinum is used as catalytic material.

10. A method according to one of the preceding claims, in which a solvent is used, which mainly contains terpineol.

11. A method according to one of the preceding claims, in which the paste is composed of 10 through 50%, preferably 20 through 30% by mass solid matter, 0 through 10%, preferably 1 through 2% by mass binder, 0 through 5%, preferably 1 through 2% by mass plasticizer, the rest being solvent.

12. A method according to one of the preceding claims, in which the paste contains 60 through 80% by mass solvent.

## Revendications

1. Procédé de production d'une membrane comprenant une couche catalytique appliquée pour l'utilisation dans des cellules électrochimiques à basse température, comprenant les étapes :
a) de mélanger un solvant hydrophobe, un matériau catalytique ainsi qu'une solution de polymère pour former une pâte, qui ne contient pas de solvants hydrophiles,
b) d'appliquer des couches de pâte sur une membrane polymère,
c) de comprimer la membrane et la pâte appliquée en amenant de la chaleur, de sorte que les solvants se dégagent et le matériau catalytique est fixé sur la membrane.

2. Procédé selon la revendication 1, dans lequel les couches de pâte sont appliquées sur la membrane par sérigraphie.

3. Procédé selon la revendication 1 ou 2, dans lequel un autre liant est ajouté à la pâte.

4. Procédé selon l'une des revendications précédentes, dans lequel un plastifiant est ajouté à la pâte.

5. Procédé selon l'une des revendications précédentes, dans lequel les couches de pâte appliquées sur la membrane sont séchées aux températures comprises entre 30°C et 80°C avant la compression.

6. Procédé selon l'une des revendications précédentes, dans lequel la pâte est appliquée sur la membrane avec une épaisseur comprise entre 10 et 100 µm.

7. Procédé selon l'une des revendications précédentes, dans lequel on utilise Nafion® comme polymère.

8. Procédé selon l'une des revendications précédentes, dans lequel la pâte appliquée et la membrane sont comprimées aux températures comprises entre 100°C et 150°C.

9. Procédé selon l'une des revendications précédentes, dans lequel on utilise du platine comme matériau catalytique.

10. Procédé selon l'une des revendications précédentes, dans lequel on utilise un solvant, qui contient du terpinéol pour la plupart.

11. Procédé selon l'une des revendications précédentes, dans lequel la pâte est composée de 10 à 50%, de préférence de 20 à 30% en poids de matière solide, de 0 à 10%, de préférence de 1 à 2% en poids de liant, de 0 à 5%, de préférence de 1 à 2% en poids de plastifiant, le reste étant du solvant.

12. Procédé selon l'une des revendications précédentes, dans lequel la pâte contient 60 à 80% en poids de solvant.
